(19) **Europäisches Patentamt**
**European Patent Office**
**Office européen des brevets**

(11) **EP 4 620 590 A1**

(12) **EUROPEAN PATENT APPLICATION**
published in accordance with Art. 153(4) EPC

(43) Date of publication:
**24.09.2025 Bulletin 2025/39**

(21) Application number: **23921315.0**

(22) Date of filing: **24.11.2023**

(51) International Patent Classification (IPC):
**B21D 22/00** *(2006.01)*

(52) Cooperative Patent Classification (CPC):
**B21D 22/00; G06F 30/23**

(86) International application number:
**PCT/JP2023/042125**

(87) International publication number:
**WO 2024/166495 (15.08.2024 Gazette 2024/33)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **09.02.2023  JP 2023018062**

(71) Applicant: **JFE Steel Corporation
Tokyo 100-0011 (JP)**

(72) Inventor: **KARIYAZAKI, Yuta
Tokyo 100-0011 (JP)**

(74) Representative: **Grünecker Patent- und
Rechtsanwälte
PartG mbB
Leopoldstraße 4
80802 München (DE)**

(54) **PRESS-MOLDING SIMULATION ANALYSIS METHOD, DEVICE AND PROGRAM, AND PRESS-MOLDED PRODUCT MANUFACTURING METHOD**

(57)      According to the present invention, provided is a press forming simulation analysis method for performing press forming analysis and spring back analysis of a press formed part using finite element analysis with shell elements in consideration of stress in a sheet thickness direction using a computer, the method including: a step (S1) of performing the press forming analysis of the press formed part and obtaining stress at a forming bottom dead center; a step (S3) of determining a yield condition of the press formed part at the forming bottom dead center based on the obtained stress at the forming bottom dead center; a step (S5) of correcting a stress component in an in-plane direction at the forming bottom dead center of the press formed part in consideration of the determined yield condition; and a step (S7) of performing the spring-back analysis of the press formed part using the corrected stress component in the in-plane direction at the forming bottom dead center.

FIG.1

| PRESS FORMING ANALYSIS STEP | S1 |

| YIELD DETERMINATION STEP | S3 |

FORMING BOTTOM DEAD CENTER STRESS CORRECTION STEP — S5

| CHANGE NORMAL STRESS AND SHEARED STRESS COMPONENT IN SHEET THICKNESS DIRECTION TO ZERO IN PSEUDO MANNER | S5a |

| CALCULATE STRAIN CHANGE AMOUNTS OF NORMAL STRAIN AND SHEARED STRAIN IN SHEET THICKNESS DIRECTION ACCORDING TO YIELD CONDITION | S5b |

| CALCULATE CHANGE AMOUNTS (IN-PLANE STRESS CHANGE AMOUNTS) OF NORMAL STRESS AND SHEARED STRESS COMPONENT IN DIRECTION OTHER THAN SHEET THICKNESS DIRECTION ACCORDING TO YIELD CONDITION | S5c |

| CORRECT NORMAL STRESS AND SHEARED STRESS COMPONENT IN DIRECTION OTHER THAN SHEET THICKNESS DIRECTION ON BASIS OF IN-PLANE STRESS CHANGE AMOUNT | S5d |

| SPRING-BACK ANALYSIS STEP | S7 |

EP 4 620 590 A1

**Description**

Field

The present invention relates to a press forming simulation analysis method, a device, and a program for performing press forming analysis and spring-back analysis of a press formed part using finite element analysis with shell elements in consideration of stress in a sheet thickness direction, and a method for manufacturing the press formed part.

Background

Automotive bodies are mostly manufactured by press forming of metal sheets. However, in the press forming, spring back, which is an elastic recovery phenomenon caused when a press formed part is released from a press die, is a major problem. The spring back of the press formed part significantly increases as the strength of the metal sheet as a material increases. The press formed part affected by spring back not only deteriorates the appearance quality but also causes a weld defect at the time of assembly. Therefore, when a high-strength metal sheet is applied to the press forming, it is essential to take measures to suppress the spring back of the press formed part.

The elastic recovery phenomenon, which is a cause of the spring back, is caused by release of a residual bending moment when the press formed part is released from the press die. Therefore, in the related art, as the countermeasures against spring back, there have been many methods for alleviating non-uniformity of residual stress generated in the press formed part.

For example, Patent Literature 1 discloses a technology of forming an intermediate formed part in which a plurality of embosses are disposed in a portion to be a stretch flange forming portion and a plurality of excess metal beads are formed in a portion to be a shrink flange forming portion, and crushing the embosses before reaching a bottom dead center of press in a final step of pressing. According to Patent Literature 1, it is described that residual stress can be reduced by forming excess metal beads to apply tensile stress in the shrink flange forming portion, the residual stress can be reduced by crushing the embosses to apply compressive stress in the stretch flange forming portion, and thus a residual stress distribution can be homogenized.

Furthermore, Patent Literature 2 discloses a technology of manufacturing an intermediate part in which a curvature radius along a longitudinal direction for each of a top portion and a flange portion is smaller than a product shape in a first step, and press forming the intermediate part into a product shape in a second step. According to Patent Literature 2, a bending moment generated by a stress difference between the top portion and the flange portion is reduced, and spring back (camber back) in side view can be greatly reduced.

As described above, it is considered that the spring back of the press formed part is greatly affected by the stress state at the forming bottom dead center. Therefore, in order to take measures to reduce spring back, it is important to first accurately identify the stress state at the forming bottom dead center of the press formed part using the press forming analysis, and then perform spring-back analysis based on the stress state at the forming bottom dead center obtained by press forming analysis.

In general, the spring-back analysis is analysis of a stress state after die release, and shell elements (two-dimensional elements) assuming a plane stress state are used. Therefore, the stress in the sheet thickness direction at the forming bottom dead center obtained through the press forming analysis cannot be transferred to the spring-back analysis. Therefore, in the spring-back analysis, it is conceivable to treat the stress in the sheet thickness direction at the forming bottom dead center obtained through the press forming analysis as zero. However, when the spring-back analysis is performed subsequent to the press forming analysis using the shell elements, the calculation accuracy of the spring-back analysis is reduced in the processing method for treating the stress in the sheet thickness direction as simply zero.

Patent Literature 3 discloses a technology of performing spring-back analysis by correcting a stress state at the forming bottom dead center obtained through the press forming analysis in the press forming analysis and spring-back analysis using the shell elements in consideration of the stress in the sheet thickness direction. According to the technology, when bridging from the press forming analysis using the shell elements to the spring-back analysis, the calculation accuracy of the spring-back analysis is improved by considering the stress change in a direction other than the sheet thickness direction associated with the stress change in which the stress in the sheet thickness direction at the bottom dead center is set to zero.

Citation List

Patent Literature

Patent Literature 1: Japanese Patent No. 5380890
Patent Literature 2: Japanese Patent No. 6176430
Patent Literature 3: Japanese Patent No. 5737059

Summary

Technical Problem

Patent Literature 3 discloses a method for correcting stress in a direction other than the sheet thickness direction based on the stress-strain relation of an elastic body assuming a stress change that sets the stress in the sheet thickness direction to zero as elastic deformation. However, in the spring-back analysis of the press formed part for which bottoming is performed using a high-strength steel sheet, it is not appropriate to assume that the material is an elastic body depending on the magnitude of the stress in the sheet thickness direction. Therefore, the method disclosed in Patent Literature 3 has a problem that the stress at the forming bottom dead center cannot be accurately corrected. In particular, it was significant in a thick material with a sheet thickness of 2.0 mm or more. Moreover, since the method disclosed in Patent Literature 3 neglects a sheared stress component including a sheet thickness direction, there has been a possibility of causing a decrease in calculation accuracy in the spring-back analysis of a press formed part for a high-strength steel sheet (for example, 1180 MPa class or more).

The present invention has been made to solve the above problems, and an object thereof is to provide a press forming simulation analysis method, a device, and a program for improving the calculation accuracy of press forming analysis and spring-back analysis using finite element analysis with shell elements. Furthermore, another object of the present invention is to provide a method for manufacturing a press formed part, which is capable of manufacturing the press formed part with improved dimensional accuracy.

Solution to Problem

A press forming simulation analysis method according to the present invention performs press forming analysis and spring-back analysis of a press formed part using finite element analysis with shell elements in consideration of stress in a sheet thickness direction using a computer, and includes: a press forming analysis step of performing the press forming analysis of the press formed part to obtain stress at a forming bottom dead center of the press formed part; a yield determination step of determining a yield condition at the forming bottom dead center of the press formed part based on the obtained stress at the forming bottom dead center; a forming bottom dead center stress correction step of correcting the stress at the forming bottom dead center of the press formed part in consideration of the determined yield condition; and a spring-back analysis step of performing the spring back analysis of the press formed part using the corrected stress at the forming bottom dead center, wherein the forming bottom dead center stress correction step includes: changing normal stress and a sheared stress component in the sheet thickness direction in the stress at the forming bottom dead center obtained in the press forming analysis step to zero in a pseudo manner; obtaining a strain change amount of each of a normal strain and a sheared strain in the sheet thickness direction involving the stress change in the sheet thickness direction in consideration of the yield condition determined in the yield determination step; obtaining in-plane stress change amounts of the normal stress and the sheared stress in an in-plane direction in consideration of the yield condition determined in the yield determination step and the strain change amount of each of the normal strain and the sheared strain in the sheet thickness direction; and correcting the normal stress and the sheared stress in the in-plane direction at the forming bottom dead center of the press formed part based on the obtained in-plane stress change amount.

A press forming simulation analysis device according to the present invention performs press forming analysis and spring-back analysis of a press formed part using finite element analysis with shell elements in consideration of stress in a sheet thickness direction, and includes: a press forming analysis unit configured to perform the press forming analysis of the press formed part to obtain stress at a forming bottom dead center of the press formed part; a yield determination unit configured to determine a yield condition at the forming bottom dead center of the press formed part based on the obtained stress at the forming bottom dead center; a forming bottom dead center stress correction unit configured to correct the stress at the forming bottom dead center of the press formed part in consideration of the determined yield condition; and a spring-back analysis unit configured to perform the spring back analysis of the press formed part using the corrected stress at the forming bottom dead center, wherein the forming bottom dead center stress correction unit is configured to: change normal stress and a sheared stress component in the sheet thickness direction in the stress at the forming bottom dead center obtained by the press forming analysis unit to zero in a pseudo manner; obtain a strain change amount of each of a normal strain and a sheared strain in the sheet thickness direction involving the stress change in the sheet thickness direction in consideration of the yield condition determined by the yield determination unit; obtain in-plane stress change amounts of the normal stress and the sheared stress in an in-plane direction using the yield condition determined by the yield determination unit and the strain change amount of each of the normal strain and the sheared strain in the sheet thickness direction; and correct the normal stress and the sheared stress in the in-plane direction at the forming bottom dead center of the press formed part based on the obtained in-plane stress change amount.

A press forming simulation analysis program according to the present invention performs press forming analysis and spring-back analysis of a press formed part using finite element analysis with shell elements in consideration of stress in a sheet thickness direction, and causes a computer to function as: a press forming analysis unit configured to perform the press forming analysis of the press formed part to obtain stress at a forming bottom dead center of the press formed part; a yield determination unit configured to determine a yield condition at the forming bottom dead center of the press formed part based on the obtained stress at the forming bottom dead center; a forming bottom dead center stress correction unit configured to correct the stress at the forming bottom dead center of the press formed part in consideration of the determined yield condition; and a spring-back analysis unit configured to perform the spring back analysis of the press formed part using the corrected stress at the forming bottom dead center, wherein the forming bottom dead center stress correction unit is configured to: change normal stress and a sheared stress component in the sheet thickness direction in the stress at the forming bottom dead center obtained by the press forming analysis unit to zero in a pseudo manner; obtain a strain change amount of each of a normal strain and a sheared strain in the sheet thickness direction involving the stress change in the sheet thickness direction in consideration of the yield condition determined by the yield determination unit; obtain in-plane stress change amounts of the normal stress and the sheared stress in an in-plane direction using the yield condition determined by the yield determination unit and the strain change amount of each of the normal strain and the sheared strain in the sheet thickness direction; and correct the normal stress and the sheared stress in the in-plane direction at the forming bottom dead center of the press formed part based on the obtained in-plane stress change amount.

A method according to the present invention manufactures a press formed part with improved dimensional accuracy by adjusting a press forming condition so as to reduce a spring-back amount, and includes: a temporary press forming condition setting step of setting a temporary press forming condition for the press formed part; a spring-back amount calculation step of calculating a spring-back amount of the press formed part using the press forming simulation analysis method according to the present invention based on the temporary press forming condition; a spring-back amount determination step of determining whether or not the calculated spring-back amount is within a predetermined range; a temporary press forming condition changing step of changing the temporary press forming condition in a case where it is determined in the spring-back amount determination step that the spring-back amount is out of the predetermined range; a repetition step of repeatedly executing the temporary press forming condition changing step, the spring-back amount calculation step, and the spring-back amount determination step until it is determined in the spring-back amount determination step that the spring-back amount is within the predetermined range; a press forming condition determination step of determining the temporary press forming condition as the press forming condition for the press formed part in a case where it is determined in the spring-back amount determination step that the spring-back amount is within the predetermined range; and a press forming step of press-forming the press formed part under the determined press forming condition.

Advantageous Effects of Invention

In the present invention, the press forming analysis of the press formed part is performed using the finite element analysis with shell elements in consideration of the stress in the sheet thickness direction, the stress component at the forming bottom dead center is obtained, and a yield condition at the forming bottom dead center is determined. Then, in consideration of the determined yield condition, the stress component in the in-plane direction generated by the stress change that pseudo-sets the stress component in the sheet thickness direction, including the sheared stress component, to zero is corrected, and the spring-back analysis is performed. Thus, the calculation accuracy of the spring-back analysis can be improved.

Furthermore, the spring back amount is calculated based on the press forming simulation analysis method according to the present invention, and the press forming condition is adjusted and determined such that the spring-back amount falls within a predetermined range. By actually press-forming the press formed part under the determined press forming condition, a press formed part with improved dimensional accuracy can be manufactured.

Brief Description of Drawings

[FIG. 1] FIG. 1 is a flowchart illustrating a flow of processing in a press forming simulation analysis method according to a first embodiment of the present invention.
[FIG. 2] FIG. 2 is a block diagram illustrating a configuration of a press forming simulation analysis device according to the first embodiment of the present invention.
[FIG. 3] FIG. 3 is a flowchart illustrating a flow of processing in a method for manufacturing a press formed part according to a second embodiment of the present invention.

[FIG. 4] FIG. 4 is a diagram for describing a V-bending test in which a blank is subjected to V-bending in an example.

[FIG. 5] FIG. 5 is a contour diagram illustrating stress distribution at a forming bottom dead center of a press formed part obtained by V-bending a blank in examples ((a) a first comparative example and (b) an invention example).

[FIG. 6] FIG. 6 is a contour diagram illustrating a result of determining a yield condition based on a stress state at a forming bottom dead center of a press formed part obtained through press forming analysis according to an invention example in examples.

[FIG. 7] FIG. 7 is a graph depicting, in Examples, experimental values of spring-back angles of press formed parts in a V-bending test, and results for spring-back amounts (angles) of press formed parts obtained through press forming analysis and spring-back analysis according to a first comparative example, a second comparative example, and an invention example.

Description of Embodiments

[First embodiment]

<Press forming simulation analysis method>

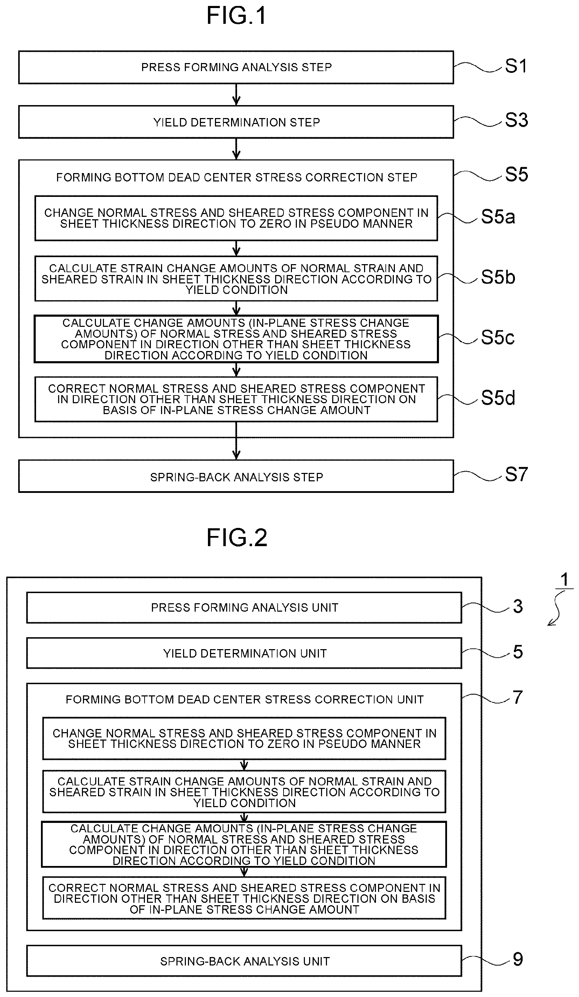

A press forming simulation analysis method according to a first embodiment is a method for performing press forming analysis and spring-back analysis of a press formed part using finite element analysis with shell elements in consideration of stress in a sheet thickness direction by using a computer. As illustrated in FIG. 1, the press forming simulation analysis method includes a press forming analysis step S1, a yield determination step S3, a forming bottom dead center stress correction step S5, and a spring-back analysis step S7. Each of these steps will be described below.

<<Press forming analysis step>>

The press forming analysis step S1 is a step of performing press forming analysis of the press formed part to obtain the stress at the forming bottom dead center. The press forming analysis is performed using finite element analysis with shell elements in consideration of stress in a sheet thickness direction. Thus, normal stress and sheared stress in sheet thickness direction and the normal stress and the sheared stress in an in-plane direction other than the sheet thickness direction are obtained as the stress at the forming bottom dead center.

<<Yield determination step>>

The yield determination step S3 is a step of determining the yield condition of the press formed part based on the stress at the forming bottom dead center acquired in the press forming analysis step S1.

In the yield determination step S3, the yield condition in the press formed part is determined using a yield function. In the first embodiment, the yield condition is determined for each shell element of the press formed part at the forming bottom dead center using a von Mises yield function shown in the following equation.

[Equation 1]

$$\sigma_{eq}^2 = \frac{1}{2}\left\{ \left(\sigma_{xx} - \sigma_{yy}\right)^2 + \left(\sigma_{yy} - \sigma_{zz}\right)^2 + (\sigma_{zz} - \sigma_{xx})^2 + 6\left(\tau_{xy}^2 + \tau_{xy}^2 + \tau_{xy}^2\right) \right\} \quad \cdots (1)$$

In Equation (1), $\sigma_{eq}$ is equivalent stress, $\sigma$ is normal stress, $\tau$ is sheared stress, x and y are in-plane directions, and z is a sheet thickness direction (hereinafter, the same applies to this).

In the yield determination step S3, first, the stress at the forming bottom dead center obtained in the press forming analysis step S1 is substituted into Equation (1), and the equivalent stress $\sigma_{eq}$ is calculated for each shell element. When the calculated equivalent stress $\sigma_{eq}$ is equal to or greater than the yield stress of a blank, it is determined that the shell element has yielded (enters a plastic state). On the other hand, when the equivalent stress $\sigma_{eq}$ is smaller than the yield stress of the blank, it is determined that the shell element has not yielded (enters elastic state).

In the yield determination step S3, the yield function used for determining the yield condition is not limited to the von Mises yield function, and other yield functions may be appropriately used.

<<Forming bottom dead center stress correction step>>

The forming bottom dead center stress correction step S5 is a step of correcting the stress at the forming bottom dead center in consideration of the yield condition determined in the yield determination step S3.

In the forming bottom dead center stress correction step S5, steps S5a, S5b, S5c, and S5d are executed to correct the stress at the forming bottom dead center using the stress-strain relation in an elasto-plastic range as illustrated in FIG. 1.

The stress-strain relation in the elasto-plastic range can be represented by an elastoplastic constitutive equation shown in Equation (2) below.

[Equation 2]

$$\{d\sigma\} = [D]\{d\varepsilon\} = ([D^e] + [D^p])\{d\varepsilon\} \qquad \cdots (2)$$

In Equation (2), $\{d\sigma\}$ is an incremental stress tensor, and $\{d\varepsilon\}$ is an incremental strain tensor. Furthermore, [D] is an elasto-plasticity coefficient tensor, and is represented by a sum of an elastic coefficient tensor $[D^e]$ and a plasticity coefficient tensor $[D^p]$ as shown in Equation (2). In the unyielded condition, that is, in the elastic state, $[D^p]$ is zero.

That is, the elasto-plasticity coefficient tensor [D] can be expressed as follows according to the yield condition determined for each shell element in the yield determination step S3.

[Equation 3]

$$[D] = [D^e] + [D^p]; \text{Yield(elasto} - \text{plastic state)},$$

$$[D] = [D^e]; \text{Unyielded(elastic state)}$$

$$\cdots (3)$$

Furthermore, the elastoplastic constitutive equation given in Equation (2) can be expressed as components as follows.

[Equation 4]

$$\begin{pmatrix} d\sigma_{xx} \\ d\sigma_{yy} \\ d\sigma_{zz} \\ d\tau_{xy} \\ d\tau_{yz} \\ d\tau_{zx} \end{pmatrix} = \begin{bmatrix} D_{11} D_{12} D_{13} D_{14} D_{15} D_{16} \\ D_{21} D_{22} D_{23} D_{24} D_{25} D_{26} \\ D_{31} D_{32} D_{33} D_{34} D_{35} D_{36} \\ D_{41} D_{42} D_{43} D_{44} D_{45} D_{46} \\ D_{51} D_{52} D_{53} D_{54} D_{55} D_{56} \\ D_{61} D_{62} D_{63} D_{64} D_{65} D_{66} \end{bmatrix} \begin{pmatrix} d\varepsilon_{xx} \\ d\varepsilon_{yy} \\ d\varepsilon_{zz} \\ d\gamma_{xy} \\ d\gamma_{yz} \\ d\gamma_{zx} \end{pmatrix} \qquad \cdots (4)$$

In Equation (4), $D_{ij}$ (i=1 to 6, j=1 to 6) is a component of the elasto-plasticity coefficient tensor, and each of these components is given according to the yield condition as shown in Equation (3).

The elastoplastic constitutive equations represented by Equations (2) and (4) is only required to represent the stress-strain relation in the elasto-plastic range, and can be derived using, for example, a Prandtl-Reuss equation which is a three-dimensional elastoplastic constitutive equation.

(a) Step S5a

As described above, in order to bridge from the press forming analysis to the spring-back analysis, the stress in the sheet thickness direction obtained using the press forming analysis with the shell elements in consideration of the stress in the sheet thickness direction is released. Therefore, in the forming bottom dead center stress correction step S5, first, the normal stress and the sheared stress component in the sheet thickness direction at the forming bottom dead center obtained in the press forming analysis step S1 are changed to zero in a pseudo manner (S5a).

The stress components at the forming bottom dead center obtained in the press forming analysis step S1 are $\sigma^*_{xx}$, $\sigma^*_{yy}$, $\sigma^*_{zz}$, $\tau^*_{xy}$, $\tau^*_{yz}$, and $\tau^*_{zx}$. The incremental stress $d\sigma$ when the stress in the sheet thickness direction (normal stress $\sigma^*_{zz}$ and sheared stress components $\tau^*_{yz}$ and $\tau^*_{zx}$) at the forming bottom dead center is changed to zero in a pseudo manner is defined as the stress change amounts $\Delta\sigma_{xx}$, $\Delta\sigma_{yy}$, $\Delta\sigma_{zz}$, $\Delta\tau_{xy}$, $\Delta\tau_{xz}$, and $\Delta\tau_{zx}$.

Among these, the stress change amounts $\Delta\sigma_{zz}$, $\Delta\tau_{yz}$, and $\Delta\tau_{zx}$ in the sheet thickness direction are represented as follows, where stresses with equal absolute values and opposite directions are substituted to change the stress to zero in a pseudo manner.

[Equation 5]

$$\Delta\sigma_{zz} = -\sigma_{zz}^*, \Delta\tau_{yz} = -\tau_{yz}^*, \Delta\tau_{zx} = -\tau_{zx}^* \qquad \cdots (5)$$

$\sigma^*_{zz}$ is normal stress in the sheet thickness direction at the forming bottom dead center, and $\tau^*_{yz}$ and $\tau^*_{zx}$ are sheared stress components in the sheet thickness direction at the forming bottom dead center.

(b) Step S5b

Next, the strain change amounts of the normal strain and the sheared strain components in the sheet thickness direction are obtained (S5b). The incremental strain $d\varepsilon$ when the stress in the sheet thickness direction is changed to zero in a pseudo manner is defined as strain change amounts $\Delta\varepsilon_{xx}$, $\Delta\varepsilon_{yy}$, $\Delta\varepsilon_{zz}$, $\Delta\gamma_{xy}$, $\Delta\gamma_{yz}$, and $\Delta\gamma_{zx}$. Assuming that deformation does not occur in the in-plane direction (other than the sheet thickness direction) due to the stress change in the sheet thickness direction, the strain change amounts $\Delta\varepsilon_{xx}$, $\Delta\varepsilon_{yy}$, and $\Delta\gamma_{xy}$ in a direction other than the sheet thickness direction can be given as the following equation.
[Equation 6]

$$\Delta\varepsilon_{xx} = \Delta\varepsilon_{yy} = \Delta\gamma_{xy} = 0 \qquad \cdots (6)$$

Then, Equation (7) below is obtained by substituting Equation (5) and Equation (6) into Equation (4).
[Equation 7]

$$\begin{pmatrix} \Delta\sigma_{xx} \\ \Delta\sigma_{yy} \\ -\sigma_{zz}^* \\ \Delta\tau_{xy} \\ -\tau_{yz}^* \\ -\tau_{zx}^* \end{pmatrix} = \begin{bmatrix} D_{11} & D_{12} & D_{13} & D_{14} & D_{15} & D_{16} \\ D_{21} & D_{22} & D_{23} & D_{24} & D_{25} & D_{26} \\ D_{31} & D_{32} & D_{33} & D_{34} & D_{35} & D_{36} \\ D_{41} & D_{42} & D_{43} & D_{44} & D_{45} & D_{46} \\ D_{51} & D_{52} & D_{53} & D_{54} & D_{55} & D_{56} \\ D_{61} & D_{62} & D_{63} & D_{64} & D_{65} & D_{66} \end{bmatrix} \begin{pmatrix} 0 \\ 0 \\ \Delta\varepsilon_{zz} \\ 0 \\ \Delta\gamma_{yz} \\ \Delta\gamma_{zx} \end{pmatrix} \qquad \cdots (7)$$

By developing Equation (7) and arranging the change amount $\Delta\varepsilon_{zz}$ of the normal strain in the sheet thickness direction and the change amounts $\Delta\gamma_{yz}$ and $\Delta\gamma_{zx}$ of the sheared strain components in the sheet thickness direction, ternary simultaneous linear equations represented by Equation (8) below are obtained.
[Equation 8]

$$-\sigma_{zz}^* = D_{33} \cdot \Delta\varepsilon_{zz} + D_{35} \cdot \Delta\gamma_{yz} + D_{36} \cdot \Delta\gamma_{zx}$$

$$-\tau_{yz}^* = D_{53} \cdot \Delta\varepsilon_{zz} + D_{55} \cdot \Delta\gamma_{yz} + D_{56} \cdot \Delta\gamma_{zx} \qquad \cdots (8)$$

$$-\tau_{zx}^* = D_{63} \cdot \Delta\varepsilon_{zz} + D_{65} \cdot \Delta\gamma_{yz} + D_{66} \cdot \Delta\gamma_{zx}$$

In Equation (8), $D_{33}$, $D_{35}$, $D_{36}$, $D_{53}$, $D_{55}$, $D_{56}$, $D_{63}$, $D_{65}$, and $D_{66}$ are components of the elasto-plasticity coefficient tensor [D] given by Equation (2). These components are calculated in consideration of the yield condition determined in the yield determination step S3, as shown in Equation (3) described above.
Furthermore, in Equation (8), $\sigma^*_{zz}$, $\tau^*_{yz}$, and $\tau^*_{zx}$ are the stress in the sheet thickness direction at the forming bottom dead center obtained in the press forming analysis step S1, and are known. Therefore, it is possible to calculate the strain change amount $\Delta\varepsilon_{zz}$ of the normal strain in the sheet thickness direction involving the stress change in the sheet thickness direction, and the strain change amounts $\Delta\gamma_{yz}$ and $\Delta\gamma_{zx}$ of the sheared strain components from Equation (8).

(c) Step S5c

Next, by using the yield condition determined in the yield determination step S3 and the strain change amounts of the normal strain and the sheared strain components in the sheet thickness direction, the in-plane stress change amounts of the normal stress and the sheared stress in the in-plane direction involving the stress change where the stress in the sheet thickness direction is changed to zero are obtained (S5c).
The in-plane stress change amounts ($\Delta\sigma_{xx}$, $\Delta\sigma_{yy}$ and $\Delta\tau_{xy}$) can be obtained by the following procedure. Equation (9) below is obtained by developing Equation (7) and arranging the in-plane stress change amounts $\Delta\sigma_{xx}$, $\Delta\sigma_{yy}$, and $\Delta\tau_{xy}$ of

the normal stress and the sheared stress in the in-plane direction other than the sheet thickness direction.
[Equation 9]

$$\Delta\sigma_{xx} = D_{13} \cdot \Delta\varepsilon_{zz} + D_{15} \cdot \Delta\gamma_{yz} + D_{16} \cdot \Delta\gamma_{zx}$$

$$\Delta\sigma_{yy} = D_{23} \cdot \Delta\varepsilon_{zz} + D_{25} \cdot \Delta\gamma_{yz} + D_{26} \cdot \Delta\gamma_{zx} \qquad \cdots (9)$$

$$\Delta\tau_{xy} = D_{43} \cdot \Delta\varepsilon_{zz} + D_{45} \cdot \Delta\gamma_{yz} + D_{46} \cdot \Delta\gamma_{zx}$$

In Equation (9), $D_{13}$, $D_{15}$, $D_{16}$, $D_{23}$, $D_{25}$, $D_{26}$, $D_{43}$, $D_{45}$, and $D_{46}$ are components of the elasto-plasticity coefficient tensor [D] given by Equation (2), and are calculated in consideration of the yield condition as shown in Equation (3).

Then, when the strain change amounts $\Delta\varepsilon_{zz}$, $\Delta\gamma_{yz}$, and $\Delta\gamma_{zx}$ of the normal strain and the sheared strain in the sheet thickness direction obtained from Equation (8) are substituted into Equation (9), the change amounts (in-plane stress change amounts) $\Delta\sigma_{xx}$, $\Delta\sigma_{yy}$, and $\Delta\tau_{xy}$ of the stress in a direction other than the sheet thickness direction are obtained.

The in-plane stress change amount thus obtained is a change amount of the stress component in the in-plane direction, which is caused due to release of the stress in the sheet thickness direction at the forming bottom dead center, that is, due to the stress change that pseudo-sets the stress component in the sheet thickness direction to zero.

(d) Step S5d

Subsequently, the normal stress and the sheared stress in the in-plane direction at the forming bottom dead center are corrected (S5d). This correction can be performed by adding the in-plane stress change amounts ($\Delta\sigma_{xx}$, $\Delta\sigma_{yy}$, and $\Delta\tau_{xy}$) to the normal stress and sheared stress ($\sigma^*_{xx}$, $\sigma^*_{yy}$, and $\tau^*_{xy}$) in the in-plane direction at the forming bottom dead center, respectively, as shown in Equation (10) below.
[Equation 10]

$$\sigma'_{xx} = \sigma^*_{xx} + \Delta\sigma_{xx}$$

$$\sigma'_{yy} = \sigma^*_{yy} + \Delta\sigma_{yy}$$

$$\sigma'_{zz} = 0$$

$$\tau'_{xy} = \tau^*_{xy} + \Delta\tau_{xx} \qquad \cdots (10)$$

$$\tau'_{yz} = 0$$

$$\tau'_{zx} = 0$$

In this manner, by executing processing in steps S5a to S5b and correcting the normal stress and the sheared stress in the in-plane direction at the forming bottom dead center, it is possible to calculate the stress component in the in-plane direction equivalent to a case where the stress in the sheet thickness direction is set to be zero in a pseudo manner.

<<Spring-back analysis step>>

In the spring-back analysis step S7, the spring-back analysis of the press formed part is performed using the stress at the forming bottom dead center corrected in the forming bottom dead center stress correction step S5. In the spring-back analysis step S7, similarly to the press forming analysis in the press forming analysis step S1, the spring-back analysis is performed using finite element analysis with the shell elements in consideration of the stress in the sheet thickness direction.

<Press forming simulation analysis device>

A press forming simulation analysis device according to the first embodiment is a device that performs press forming analysis and spring-back analysis of the press formed part using finite element analysis with shell elements in consideration of stress in a sheet thickness direction. As illustrated in FIG. 2, a press forming simulation analysis device 1 includes a press forming analysis unit 3, a yield determination unit 5, a forming bottom dead center stress correction unit 7, and a spring-back analysis unit 9. The press forming simulation analysis device 1 may be configured by a central processing unit (CPU) of a computer (PC or the like). In this case, each of the above units functions when the CPU of the computer executes a predetermined program.

<<Press forming analysis unit>>

The press forming analysis unit 3 performs press forming analysis for obtaining the stress at the forming bottom dead center of the press formed part. In the first embodiment, the press forming analysis unit 3 executes the press forming analysis step S1 of the press forming simulation analysis method according to the first embodiment described above.

<<Yield determination unit>>

The yield determination unit 5 is a unit that determines the yield condition of the press formed part based on the stress at the forming bottom dead center acquired by the press forming analysis unit 3. In the first embodiment, the yield determination unit 5 executes the yield determination step S3 of the press forming simulation analysis method according to the first embodiment described above. The yield determination unit 5 determines the yield condition of the press formed part for each shell element using the yield function. As the yield function, the above-described von Mises yield function (Equation (1)) can be used, but the yield function is not limited thereto, and another yield function may be used.

<<Forming bottom dead center stress correction unit>>

The forming bottom dead center stress correction unit 7 is a unit that corrects the stress at the forming bottom dead center in consideration of the yield condition determined by the yield determination unit 5. In the first embodiment, the forming bottom dead center stress correction unit 7 executes the forming bottom dead center stress correction step S5 of the press forming simulation analysis method according to the first embodiment described above.

The forming bottom dead center stress correction unit 7 corrects the stress at the forming bottom dead center by performing processing as illustrated in FIG. 2 using the elastoplastic constitutive equation representing the stress-strain relation in the elasto-plastic range represented by Equation (2).

First, the forming bottom dead center stress correction unit 7 changes the normal stress and the sheared stress component in the sheet thickness direction to zero in a pseudo manner in the stress at the forming bottom dead center obtained by the press forming analysis unit 3 as expressed by Equation (4).

Subsequently, in consideration of the yield condition determined by the yield determination unit 5, the forming bottom dead center stress correction unit 7 obtains each component $D_{ij}$ ($i$=1 to 6, $j$=1 to 6) of the elasto-plasticity coefficient tensor [D] based on the relation between Equation (2) and Equation (3). The forming bottom dead center stress correction unit 7 obtains the strain change amounts of the normal strain and the sheared strain components in the sheet thickness direction involving the stress change in the sheet thickness direction using Equation (7).

Subsequently, by using the yield condition determined by the yield determination unit 5 and the strain change amounts of the normal strain and the sheared strain in the sheet thickness direction, the forming bottom dead center stress correction unit 7 obtains the in-plane stress change amounts of the normal stress and the sheared stress in a direction (the in-plane direction) other than the sheet thickness direction from Equation (8).

The forming bottom dead center stress correction unit 7 corrects the normal stress and the sheared stress in the in-plane direction at the forming bottom dead center of the press formed part as shown in Equation (10) based on the in-plane stress change amount obtained from Equation (8).

<<Spring-back analysis unit>>

In the spring-back analysis unit 9, the spring-back analysis of the press formed part is performed using the stress at the forming bottom dead center corrected by the forming bottom dead center stress correction unit 7. In the first embodiment, the spring-back analysis unit 9 executes the spring-back analysis step S7 of the press forming simulation analysis method according to the first embodiment described above.

<Press forming simulation analysis program>

The first embodiment of the present invention can be configured as a press forming simulation analysis program. That is, the press forming simulation analysis program according to the first embodiment is a program for performing the press forming analysis and spring-back analysis of the press formed part using the shell elements in consideration of the stress in the sheet thickness direction. As illustrated in FIG. 2, the press forming simulation analysis program according to the first embodiment causes a computer to function as the press forming analysis unit 3, the yield determination unit 5, the forming bottom dead center stress correction unit 7, and the spring-back analysis unit 9.

In the first embodiment, the press forming analysis of the press formed part is performed using the finite element analysis with shell elements in consideration of the stress in the sheet thickness direction, the stress component at the forming bottom dead center is obtained, and the yield condition at the forming bottom dead center is determined. Then, in consideration of the determined yield condition, the stress component in the in-plane direction generated by the stress change that pseudo-sets the stress component in the sheet thickness direction, including the sheared stress component, to zero is corrected, and the spring-back analysis is performed. Thus, the calculation accuracy of the spring-back analysis can be improved.

In particular, the present invention can be preferably applied to the press forming analysis and the spring-back analysis in the case of using, as a blank, a press formed part in which a large stress is generated in the sheet thickness direction by bottoming in the sheet thickness direction at the forming bottom dead center, or a high-tensile steel sheet with a tensile strength of 1180 MPa class or more.

Moreover, since the present invention takes the sheared stress in the stress change caused due to the stress release in the sheet thickness direction into consideration as described above, the present invention can be preferably applied in a case where a thick sheet material with a thickness of 2 mm or more is used for the blank.

[Second embodiment]

<Method for manufacturing press formed part>

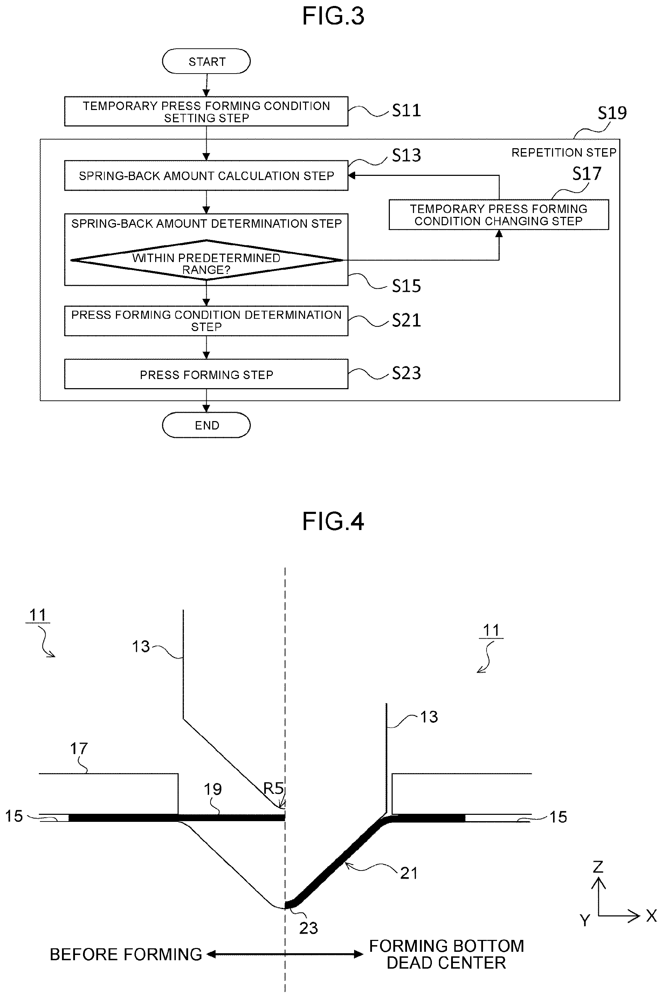

A method for manufacturing a press formed part according to a second embodiment of the present invention is a method for manufacturing a press formed part with improved dimensional accuracy by adjusting a press forming condition so as to reduce the spring-back amount. As illustrated in FIG. 3, the method for manufacturing a press formed part according to the second embodiment includes a temporary press forming condition setting step S11, a spring-back amount calculation step S13, a spring-back amount determination step S15, a temporary press forming condition changing step S17, and a repetition step S19. Moreover, the method for manufacturing a press formed part according to the second embodiment includes a press forming condition determination step S21 and a press forming step S23.

<<Temporary press forming condition setting step>>

The temporary press forming condition setting step S11 is a step of setting a temporary press forming condition for a press formed part.

Examples of the temporary press forming condition set in the temporary press forming condition setting step S11 include a bending radius of a bending bottom portion in a punch (upper die of press die) and a load at the time of bottoming at a forming bottom dead center in a case where the press formed part with a bent portion formed by V-bending a steel sheet is processed. In addition, in the case of using the draw bending method (stretch bending, and bending and stretching), the radius of a die shoulder part of a die (lower die of a press die), a blank holder pressure (pressing load of a holder against the die), and the like can be used.

<<Spring-back amount calculation step>>

The spring-back amount calculation step S13 is a step of calculating a spring-back amount using the press forming simulation analysis method according to the first embodiment based on the temporary press forming condition set in the temporary press forming condition setting step S11.

<<Spring-back amount determination step>>

The spring-back amount determination step S15 is a step of determining whether or not the spring-back amount calculated in the spring-back amount calculation step S13 is within a predetermined range.

The predetermined range of the spring-back amount is only required to be appropriately set based on, for example, the dimensional accuracy allowed for the press formed part.

<<Temporary press forming condition changing step>>

The temporary press forming condition changing step S17 is a step of changing the temporary press forming condition in a case where it is determined that the spring-back amount is out of a predetermined range in the spring-back amount determination step S15.

The temporary press forming condition is only required to be changed such that the spring-back amount calculated in the spring-back amount calculation step S13 is reduced. Examples of the temporary press forming condition include a condition related to the shape of the press die and a condition set for a control panel of a press forming machine. In the condition related to the shape of the press die, for example, in the case of V-bending, the shape of the press die (model) used for press forming analysis is only required to be changed so as to reduce the bending radius of the bending bottom portion in the punch (upper die of the press die). Furthermore, in the condition set for the control panel of the press forming machine, for example, in the case of V-bending, it is only required to increase the blank holder pressure or to increase the load at the time of bottoming at the forming bottom dead center.

<<Repetition step>>

In the repetition step S19, the temporary press forming condition changing step S17, the spring-back amount calculation step S13, and the spring-back amount determination step S15 are repeatedly executed. This repetition is executed until it is determined that the spring-back amount is within a predetermined range in the spring-back amount determination step S15. Therefore, in a case where it is not determined that the spring-back amount is within the predetermined range only by changing the temporary press forming condition once, the repetition step S19 is repeated.

<<Press forming condition determination step>>

The press forming condition determination step S21 is a step of determining the temporary press forming condition as the press forming condition in a case where it is determined that the spring-back amount is within a predetermined range in the spring-back amount determination step S15. For example, in a case where the shape of the press die is changed as the temporary press forming condition, the shape data of the press die (model) used for the press forming analysis is input to a CAD/CAM program linked with a numerically-controlled machine, and is converted into numerical control data for NC machining (numerical control program). The numerically-controlled machine machines a casting press die model made of expanded polystyrene or a steel press die using a full mold casting method (evaporative pattern casting method). By using the numerical control data (numerical control program), the casting press die model made of expanded polystyrene or a steel press die is manufactured by the numerically-controlled machine. Thus, the shape of the press die actually used for press forming can be determined as the press forming condition. Moreover, in a case where the setting of the control panel of the press forming machine is changed as the temporary press forming condition, the changed setting of the control panel of the press forming machine is determined as the actual press forming condition. For example, in a case where the blank holder pressure and the load at the time of bottoming are changed, the set value on the control panel for the air pressure or hydraulic pressure of the pneumatic or hydraulic die cushion (auxiliary pressure device) of the press forming machine can be determined as the actual press forming condition so as to be the changed blank holder pressure and the load at the time of bottoming.

<<Press forming step>>

The press forming step S23 is a step of press-forming a press formed part under the press forming condition determined in the press forming condition determination step S21.
In the method for manufacturing a press formed part according to the second embodiment, the spring back amount is calculated based on the press forming simulation analysis method according to the present invention, and the press forming condition is adjusted such that the spring-back amount falls within a predetermined range. By actually press-forming the press formed part under the adjusted press forming condition, a press formed part with improved dimensional accuracy can be manufactured.
In the method for manufacturing a press formed part according to the second embodiment, even when the press formed part is press-formed under the press forming condition adjusted to reduce the spring-back amount, the spring-back amount may not satisfy the allowable dimensional accuracy. In this case, further adjustment of the press forming condition such as the shape of the press die used for press-forming the press formed part may be repeated based on the spring-back amount of the press formed part press-formed under the adjusted press forming condition.
In the method according to the second embodiment, since the press forming condition is adjusted so as to reduce the spring-back amount, the dimensional accuracy allowed for the press formed part can be satisfied without repeating the adjustment of the press die shape and the like as the press forming condition many times. In the method for manufacturing a press formed part according to the second embodiment, it is also possible to greatly reduce the cost and period of production preparation for the press formed part.

[Example]

The experiment and analysis for confirming the operational effects of the present invention have been performed, and will be described below.

In an example, an experiment and press forming simulation analysis were performed for the V-bending test illustrated in FIG. 4.

In the V-bending test, as illustrated in FIG. 4, a press formed part 21 obtained by V-bending a blank 19 using a press die 11 including an upper die 13 of the press die, a lower die 15 of the press die, and a blank holder 17 is bottomed at a forming bottom dead center (FIG. 4(b)). The blank 19 was a high-strength steel sheet with a tensile strength of 1180 MPa class and a sheet thickness of 1.2 mm, and the bending radius of a bending bottom portion 23 of the press formed part 21, which is subjected to V-bending, was set to R5 mm, and a bending angle was set to 90°. Moreover, in the bottoming, a load of 50 kN was applied to the press formed part 21 at the forming bottom dead center.

In the press forming simulation analysis, the press forming analysis in the process of V-bending the blank 19 and bottoming the press formed part 21 at the forming bottom dead center and the spring-back analysis of the press formed part 21 subjected to V-bending were performed.

In the example, as an invention example, the press forming analysis and the spring-back analysis of the press formed part using the finite element analysis with the shell elements in consideration of the stress in the sheet thickness direction are performed by the press forming simulation analysis method according to the first embodiment described above. In the invention example, the yield condition at the forming bottom dead center is determined using the von Mises yield function. Moreover, the stress change amount in the in-plane direction is calculated using the elastoplastic constitutive equation derived using the Prandtl-Reuss equation.

Furthermore, as a first comparative example, the press forming analysis and the spring-back analysis using the finite element analysis with the shell elements that do not take the stress in the sheet thickness direction into consideration (without correcting the stress state at the forming bottom dead center), the spring-back analysis without correcting the stress at the forming bottom dead center is performed.

Moreover, as a second comparative example, the press forming analysis and the spring-back analysis are performed using the shell elements in consideration of the stress in the sheet thickness direction, and similarly to Patent Literature 3, the stress component in the in-plane direction at the forming bottom dead center is corrected assuming, as elastic deformation, a stress change that sets the stress in the sheet thickness direction to zero is corrected.

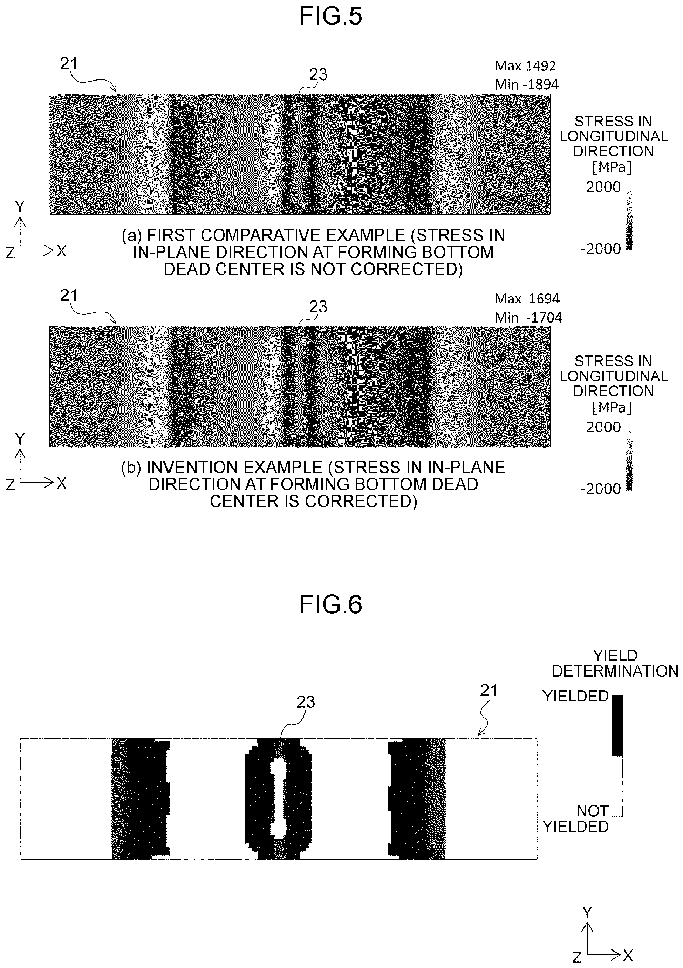

FIG. 5 illustrates a contour diagram of the normal stress distribution in a longitudinal direction which is the in-plane direction at the forming bottom dead center of the press formed part 21 subjected to the V-bending, obtained in the first comparative example and the invention example. In the inventive example, when the stress in the in-plane direction at the forming bottom dead center is corrected, the absolute values of the maximum value and the minimum value (the difference between the maximum value and minimum value of the normal stress in the longitudinal direction) are larger than those in the first comparative example (Invention example: 3398 MPa, First comparative example:3386 MPa).

FIG. 6 illustrates a result of determining the yield condition based on the stress at the forming bottom dead center of the press formed part 21 in the invention example. In FIG. 6, the black region is a region determined to be yielded, and the white region is a region determined not to be yielded (not yielded). As illustrated in FIG. 6, it can be seen that there is a region that is yielded and undergoes plastic deformation near the bending bottom portion 23 in the stress change that pseudo-sets the stress in the sheet thickness direction to zero.

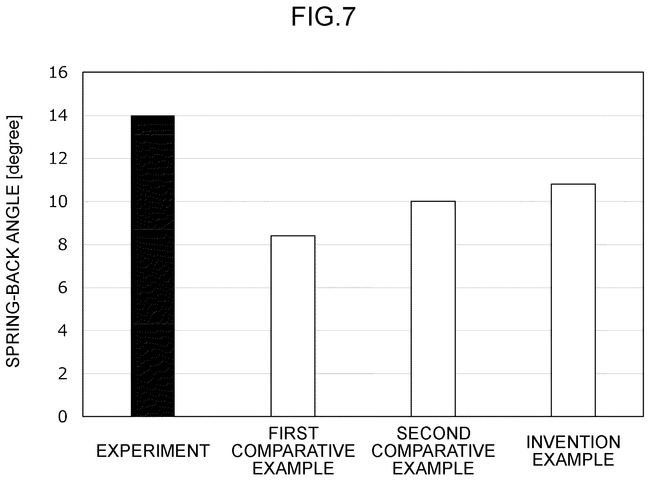

FIG. 7 is a graph depicting a result of obtaining the spring-back amount of the press formed part 21 subjected to the V-bending in the first comparative example, the second comparative example, and the invention example along with an experimental value of the spring-back amount. The spring-back amount is defined as a bending opening amount (amount of change in a bending angle due to the spring back) of the bending bottom portion 23 of the press formed part 21 after spring back.

As illustrated in FIG. 7, the spring-back amounts in the second comparative example and the invention example in consideration of the stress in the sheet thickness direction has a smaller difference from the experimental value as compared with the first comparative example that does not take the stress in the sheet thickness direction into consideration. Moreover, the invention example in which the stress in the in-plane direction at the forming bottom dead center is corrected in consideration of the yield condition has a smaller error relative to the experimental value as compared with the second comparative example in which the stress at the forming bottom dead center is corrected assuming elastic deformation, and has a good result.

As described above, in the press forming simulation analysis method, the device, and the program according to the present invention, it has been demonstrated that the calculation accuracy of the spring-back analysis is improved.

Industrial Applicability

According to the present invention, it is possible to provide a press forming simulation analysis method, a device, and a program for improving the calculation accuracy of the press forming analysis and spring-back analysis using the finite element analysis with the shell elements. Furthermore, according to the present invention, it is possible to provide a method for manufacturing a press formed part, which is capable of manufacturing the press formed part with improved dimensional accuracy.

Reference Signs List

1    PRESS FORMING SIMULATION ANALYSIS DEVICE

3    PRESS FORMING ANALYSIS UNIT

5    YIELD DETERMINATION UNIT

7    FORMING BOTTOM DEAD CENTER STRESS CORRECTION UNIT

9    SPRING-BACK ANALYSIS UNIT

11   PRESS DIE

13   UPPER DIE OF PRESS DIE

15   LOWER DIE OF PRESS DIE

17   BLANK HOLDER

19   BLANK

21   PRESS FORMED PART

23   BENDING BOTTOM PORTION

**Claims**

1. A press forming simulation analysis method for performing press forming analysis and spring-back analysis of a press formed part using finite element analysis with shell elements in consideration of stress in a sheet thickness direction using a computer, the method comprising:

    a press forming analysis step of performing the press forming analysis of the press formed part to obtain stress at a forming bottom dead center of the press formed part;
    a yield determination step of determining a yield condition at the forming bottom dead center of the press formed part based on the obtained stress at the forming bottom dead center;
    a forming bottom dead center stress correction step of correcting the stress at the forming bottom dead center of the press formed part in consideration of the determined yield condition; and
    a spring-back analysis step of performing the spring back analysis of the press formed part using the corrected stress at the forming bottom dead center,
    wherein the forming bottom dead center stress correction step includes:

        changing normal stress and a sheared stress component in the sheet thickness direction in the stress at the forming bottom dead center obtained in the press forming analysis step to zero in a pseudo manner;
        obtaining a strain change amount of each of a normal strain and a sheared strain in the sheet thickness direction involving the stress change in the sheet thickness direction in consideration of the yield condition determined in the yield determination step;
        obtaining in-plane stress change amounts of the normal stress and the sheared stress in an in-plane direction in consideration of the yield condition determined in the yield determination step and the strain change amount of each of the normal strain and the sheared strain in the sheet thickness direction; and
        correcting the normal stress and the sheared stress in the in-plane direction at the forming bottom dead center of the press formed part based on the obtained in-plane stress change amount.

2. A press forming simulation analysis device for performing press forming analysis and spring-back analysis of a press formed part using finite element analysis with shell elements in consideration of stress in a sheet thickness direction, the device comprising:

a press forming analysis unit configured to perform the press forming analysis of the press formed part to obtain stress at a forming bottom dead center of the press formed part;

a yield determination unit configured to determine a yield condition at the forming bottom dead center of the press formed part based on the obtained stress at the forming bottom dead center;

a forming bottom dead center stress correction unit configured to correct the stress at the forming bottom dead center of the press formed part in consideration of the determined yield condition; and

a spring-back analysis unit configured to perform the spring back analysis of the press formed part using the corrected stress at the forming bottom dead center,

wherein the forming bottom dead center stress correction unit is configured to:

change normal stress and a sheared stress component in the sheet thickness direction in the stress at the forming bottom dead center obtained by the press forming analysis unit to zero in a pseudo manner;

obtain a strain change amount of each of a normal strain and a sheared strain in the sheet thickness direction involving the stress change in the sheet thickness direction in consideration of the yield condition determined by the yield determination unit;

obtain in-plane stress change amounts of the normal stress and the sheared stress in an in-plane direction using the yield condition determined by the yield determination unit and the strain change amount of each of the normal strain and the sheared strain in the sheet thickness direction; and

correct the normal stress and the sheared stress in the in-plane direction at the forming bottom dead center of the press formed part based on the obtained in-plane stress change amount.

3. A press forming simulation analysis program for performing press forming analysis and spring-back analysis of a press formed part using finite element analysis with shell elements in consideration of stress in a sheet thickness direction, the program causing a computer to function as:

a press forming analysis unit configured to perform the press forming analysis of the press formed part to obtain stress at a forming bottom dead center of the press formed part;

a yield determination unit configured to determine a yield condition at the forming bottom dead center of the press formed part based on the obtained stress at the forming bottom dead center;

a forming bottom dead center stress correction unit configured to correct the stress at the forming bottom dead center of the press formed part in consideration of the determined yield condition; and

a spring-back analysis unit configured to perform the spring back analysis of the press formed part using the corrected stress at the forming bottom dead center,

wherein the forming bottom dead center stress correction unit is configured to:

change normal stress and a sheared stress component in the sheet thickness direction in the stress at the forming bottom dead center obtained by the press forming analysis unit to zero in a pseudo manner;

obtain a strain change amount of each of a normal strain and a sheared strain in the sheet thickness direction involving the stress change in the sheet thickness direction in consideration of the yield condition determined by the yield determination unit;

obtain in-plane stress change amounts of the normal stress and the sheared stress in an in-plane direction using the yield condition determined by the yield determination unit and the strain change amount of each of the normal strain and the sheared strain in the sheet thickness direction; and

correct the normal stress and the sheared stress in the in-plane direction at the forming bottom dead center of the press formed part based on the obtained in-plane stress change amount.

4. A method for manufacturing a press formed part with improved dimensional accuracy by adjusting a press forming condition so as to reduce a spring-back amount, the method comprising:

a temporary press forming condition setting step of setting a temporary press forming condition for the press formed part;

a spring-back amount calculation step of calculating a spring-back amount of the press formed part using the press forming simulation analysis method according to claim 1 based on the temporary press forming condition;

a spring-back amount determination step of determining whether or not the calculated spring-back amount is within a predetermined range;

a temporary press forming condition changing step of changing the temporary press forming condition in a case where it is determined in the spring-back amount determination step that the spring-back amount is out of the predetermined range;

a repetition step of repeatedly executing the temporary press forming condition changing step, the spring-back amount calculation step, and the spring-back amount determination step until it is determined in the spring-back amount determination step that the spring-back amount is within the predetermined range;

a press forming condition determination step of determining the temporary press forming condition as the press forming condition for the press formed part in a case where it is determined in the spring-back amount determination step that the spring-back amount is within the predetermined range; and

a press forming step of press-forming the press formed part under the determined press forming condition.

# FIG.1

| PRESS FORMING ANALYSIS STEP | S1 |

↓

| YIELD DETERMINATION STEP | S3 |

↓

FORMING BOTTOM DEAD CENTER STRESS CORRECTION STEP — S5

| CHANGE NORMAL STRESS AND SHEARED STRESS COMPONENT IN SHEET THICKNESS DIRECTION TO ZERO IN PSEUDO MANNER | S5a |

↓

| CALCULATE STRAIN CHANGE AMOUNTS OF NORMAL STRAIN AND SHEARED STRAIN IN SHEET THICKNESS DIRECTION ACCORDING TO YIELD CONDITION | S5b |

↓

| CALCULATE CHANGE AMOUNTS (IN-PLANE STRESS CHANGE AMOUNTS) OF NORMAL STRESS AND SHEARED STRESS COMPONENT IN DIRECTION OTHER THAN SHEET THICKNESS DIRECTION ACCORDING TO YIELD CONDITION | S5c |

↓

| CORRECT NORMAL STRESS AND SHEARED STRESS COMPONENT IN DIRECTION OTHER THAN SHEET THICKNESS DIRECTION ON BASIS OF IN-PLANE STRESS CHANGE AMOUNT | S5d |

↓

| SPRING-BACK ANALYSIS STEP | S7 |

# FIG.2

1

| PRESS FORMING ANALYSIS UNIT | 3 |

| YIELD DETERMINATION UNIT | 5 |

FORMING BOTTOM DEAD CENTER STRESS CORRECTION UNIT — 7

| CHANGE NORMAL STRESS AND SHEARED STRESS COMPONENT IN SHEET THICKNESS DIRECTION TO ZERO IN PSEUDO MANNER |

↓

| CALCULATE STRAIN CHANGE AMOUNTS OF NORMAL STRAIN AND SHEARED STRAIN IN SHEET THICKNESS DIRECTION ACCORDING TO YIELD CONDITION |

↓

| CALCULATE CHANGE AMOUNTS (IN-PLANE STRESS CHANGE AMOUNTS) OF NORMAL STRESS AND SHEARED STRESS COMPONENT IN DIRECTION OTHER THAN SHEET THICKNESS DIRECTION ACCORDING TO YIELD CONDITION |

↓

| CORRECT NORMAL STRESS AND SHEARED STRESS COMPONENT IN DIRECTION OTHER THAN SHEET THICKNESS DIRECTION ON BASIS OF IN-PLANE STRESS CHANGE AMOUNT |

| SPRING-BACK ANALYSIS UNIT | 9 |

# FIG.3

```
        START

TEMPORARY PRESS FORMING CONDITION          S11                              S19
         SETTING STEP

                                                                   REPETITION STEP
   SPRING-BACK AMOUNT CALCULATION STEP      S13                        S17

                                                        TEMPORARY PRESS FORMING
                                                        CONDITION CHANGING STEP
  SPRING-BACK AMOUNT DETERMINATION STEP

            WITHIN PREDETERMINED
                  RANGE?
                                            S15

   PRESS FORMING CONDITION DETERMINATION    S21
                  STEP

           PRESS FORMING STEP               S23

        END
```

# FIG.4

BEFORE FORMING ⟷ FORMING BOTTOM DEAD CENTER

# FIG.5

21                        23            Max 1492
Min -1894

STRESS IN
LONGITUDINAL
DIRECTION
[MPa]

2000

-2000

(a) FIRST COMPARATIVE EXAMPLE (STRESS IN
IN-PLANE DIRECTION AT FORMING BOTTOM
DEAD CENTER IS NOT CORRECTED)

21                        23            Max 1694
Min -1704

STRESS IN
LONGITUDINAL
DIRECTION
[MPa]

2000

-2000

(b) INVENTION EXAMPLE (STRESS IN IN-PLANE
DIRECTION AT FORMING BOTTOM DEAD
CENTER IS CORRECTED)

# FIG.6

YIELD
DETERMINATION

YIELDED

23                        21

NOT
YIELDED

18

# FIG.7

## INTERNATIONAL SEARCH REPORT

| International application No. |
| --- |
| **PCT/JP2023/042125** |

**A. CLASSIFICATION OF SUBJECT MATTER**

**_B21D 22/00_**(2006.01)i

FI: B21D22/00

According to International Patent Classification (IPC) or to both national classification and IPC

**B. FIELDS SEARCHED**

Minimum documentation searched (classification system followed by classification symbols)

B21D22/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2013-45119 A (JFE STEEL CORPORATION) 04 March 2013 (2013-03-04) <br> entire text, all drawings | 1-4 |
| A | JP 2013-208622 A (JSOL CORP.) 10 October 2013 (2013-10-10) <br> entire text, all drawings | 1-4 |
| A | JP 2010-234416 A (KABUSHIKI KAISHA TOYOTA CHUO KENKYUSHO) 21 October 2010 (2010-10-21) <br> entire text, all drawings | 1-4 |
| A | JP 2012-22603 A (TOYOTA JIDOSHA KABUSHIKI KAISHA) 02 February 2012 (2012-02-02) <br> entire text, all drawings | 1-4 |

☐ Further documents are listed in the continuation of Box C.　　☑ See patent family annex.

| | | |
| --- | --- | --- |
| * | Special categories of cited documents: | |
| "A" | document defining the general state of the art which is not considered to be of particular relevance | |
| "D" | document cited by the applicant in the international application | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
| --- | --- |
| **05 February 2024** | **13 February 2024** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (July 2022)

**INTERNATIONAL SEARCH REPORT**
Information on patent family members

International application No.

**PCT/JP2023/042125**

| Patent document cited in search report | | | Publication date (day/month/year) | Patent family member(s) | Publication date (day/month/year) |
|---|---|---|---|---|---|
| JP | 2013-45119 | A | 04 March 2013 | (Family: none) | |
| JP | 2013-208622 | A | 10 October 2013 | (Family: none) | |
| JP | 2010-234416 | A | 21 October 2010 | (Family: none) | |
| JP | 2012-22603 | A | 02 February 2012 | (Family: none) | |

Form PCT/ISA/210 (patent family annex) (July 2022)

**EP 4 620 590 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5380890 B
- JP 6176430 B

- JP 5737059 B